# EUROPEAN PATENT APPLICATION

(11) **EP 4 782 158 A1**
(43) Date of publication of application: **29.07.2026**
(21) Application number: 23953148.6
(22) Date of filing: 18.09.2023
(51) Int. Cl.: B25J 5/00, B25J 9/00, B25J 11/00, B25J 19/00, B62B 5/00, F16D 65/22

(54) **MOBILE ROBOT AND MOBILE MEANS**

(71) Applicant: Bear Robotics Korea, Inc., Seoul 04779 (KR)
(72) Inventor: LEE, Haklim, Seoul 06772 (KR)
(74) Representative: Murgitroyd & Company
(86) International application number: PCT/KR2023/014058
(87) International publication number: WO 2025/063323

(57) **Abstract**

Embodiments of the present disclosure provide a mobile robot and a mobile means, the mobile robot comprising a brake unit connected to a fixing bracket positioned on the upper surface of the body of the mobile robot, wherein a connector of a cart connects to the brake unit so that when the traveling mobile robot stops, the cart also stops moving.

## Description

### [Technical Field]

The present disclosure relates to a mobile robot and a mobile system capable of stopping the movement of a cart together when the mobile robot, which moves in combination with the cart, stops.

### [Background]

To take charge of a portion of factory automation, robots have been developed for industrial use. Recently, the application range of robots has been further expanded, and robots that can be used in daily life as well as medical robots and aerospace robots are being developed.

Among industrial robots, robots that perform precise assembly work repeatedly perform the same operations and repeat the operations without encountering unexpected situations at a predetermined position, so that automation using the robots has been proceeded.

However, a transportation area including a traveling area (i.e., a driving area) where occurrence or non-occurrence of unexpected situations can be determined, has not yet been actively commercialized with robots. However, recently, as performance of sensors that recognize the surroundings has improved and computer technology that can quickly process the recognized information has evolved, the number of driving robots has rapidly increased.

Industrially, robots that are in charge of transportation functions have attracted attention and competition in robot technology is intensifying day by day. In addition to robots that transport large or large quantities of goods, there is a need for robots that provide services for transporting small goods to their destinations.

For automation and improved efficiency of logistics transport, it is required that a robot moves toward a cart loaded with goods and moves together with the cart in a state of being coupled with the cart.

However, in order for the robot to move the cart to the destination while being coupled with the cart, it is necessary to prevent the cart from tilting and falling or localized loads from being applied to the robot while the robot is moving by preventing a bias in the center of gravity of the cart.

In particular, because the weight of the cart for transporting the goods is greater than the weight of the robot, the cart has the greater momentum. Therefore, even when the robot stops, the cart does not stop immediately and pushes the robot forward.

Conventionally, due to the above-described problem, the moving speed of the robot is inevitably low, and accordingly, the work efficiency of logistics transport is inevitably lowered. In addition, to solve the above-described problem, applying brake devices to wheels themselves mounted on the cart is challenging due to the size of the wheel mounted on the cart or spatial constraints.

Therefore, there is a need for a means to reduce constraints during the movement of the robot and increase the work efficiency of logistics transport by allowing the cart, which was moving in coupling with the robot, to stop together when the robot stops moving.

### [Summary]

### [Technical Problem]

The present disclosure relates to a mobile robot and a mobile system, and more particularly, is intended to provide a mobile robot and a mobile system capable of stopping the movement of a cart together when the mobile robot, which moves in combination with the cart, stops.

In addition, the present disclosure is intended to provide a mobile robot and a mobile system capable of stably stopping a moving cart even when the moving speed of the mobile robot changes or the mobile robot suddenly stops.

In addition, the present disclosure is intended to provide a mobile robot and a mobile system capable of increasing the work efficiency by allowing for higher moving speed of the mobile robot as the moving cart may be stably stopped.

Technical purposes to be achieved by the present disclosure are not limited to the technical purposes mentioned above, and other technical purposes not mentioned will be clearly understood by those skilled in the art to which the present disclosure belongs from the following description.

### [Technical Solutions]

Provided is a mobile robot comprising: a body including a driving unit; a fixing bracket located on an upper surface of the body; and a brake unit connected to the fixing bracket, wherein a connector of a cart is connected to the brake unit, wherein the brake unit is configured to stop movement of the cart when the driving unit stops traveling, wherein the brake unit includes: a traction bar having one end coupled to the fixing bracket; a guide groove defined at an opposite end of the traction bar to extend in a first direction that is a traveling direction of the driving unit, wherein a first elastic member is located in the guide groove; a fastening shaft disposed in a second direction perpendicular to the first direction and having a guide block inserted into the guide groove to be in contact with the first elastic member; a brake frame coupled to the fastening shaft; and a connector holder coupled to one end of the brake frame, wherein the connector of the cart extends through and is fastened to the connector holder.

The guide block of the fastening shaft may be configured to move in the first direction along the guide groove and apply an elastic force to the first elastic member when the driving unit stops traveling.

The guide block of the fastening shaft may be formed in a rectangular shape so that the fastening shaft does not rotate when moving along the guide groove.

The brake unit may include: a wheel frame having one end coupled to the opposite end of the traction bar; a rotation shaft disposed in the second direction and rotatably coupled to an opposite end of the wheel frame; and a traction wheel coupled to the rotation shaft and rotatable together with the rotation shaft.

The brake frame may be coupled to the fastening shaft so as to be pivotable about the fastening shaft, the brake frame may be configured to pivot by movement of the cart in the first direction when the driving unit stops traveling, and the brake unit may include a braking assembly configured to stop rotation of the traction wheel by the pivoting of the brake frame.

The braking assembly may include: a brake drum connected to the rotation shaft and rotatable together with the traction wheel; a brake wheel disposed adjacent to the brake drum and coupled to an opposite end of the brake frame; and a brake pad coupled to the brake wheel and configured to cause friction with the brake drum.

The brake wheel may include a brake bar extending from an outer circumferential surface thereof and hinged to the opposite end of the brake frame, and the brake wheel may be configured to rotate together when the brake frame pivots and bring the brake pad into close contact with the brake drum.

The connector holder may include: a fastening groove defined in a third direction perpendicular to the first direction and the second direction, wherein a second elastic member is located in the fastening groove; and a stopper pin coupled to the second elastic member, wherein when the connector of the cart is fastened, the stopper pin is configured to move in the third direction along the fastening groove and fix the connector of the cart by applying an elastic force to the second elastic member.

The connector holder may be pivotable about a third direction perpendicular to the first direction and the second direction.

The traction bar may be pivotable about the third direction.

Provided is a mobile system comprising: a mobile robot including a body including a driving unit, a fixing bracket located on an upper surface of the body, and a brake unit connected to the fixing bracket; and a cart including a connector connected to the brake unit of the mobile robot, wherein the brake unit includes: a traction bar having one end coupled to the fixing bracket; a guide groove defined at an opposite end of the traction bar to extend in a first direction that is a traveling direction of the driving unit, wherein a first elastic member is located in the guide groove; a fastening shaft disposed in a second direction perpendicular to the first direction and having a guide block inserted into the guide groove to be in contact with the first elastic member; a brake frame coupled to the fastening shaft; and a connector holder coupled to one end of the brake frame, wherein the connector of the cart extends through and is fastened to the connector holder, wherein the brake unit is configured to stop movement of the cart when the driving unit stops traveling.

The connector of the cart may include, on a side surface thereof: a side protrusion protruding while being inclined in a direction opposite to the first direction; and a stopper protrusion protruding while being spaced apart from the side protrusion.

The connector holder may include: a fastening groove defined in a third direction perpendicular to the first direction and the second direction, wherein a second elastic member is located in the fastening groove; and a stopper pin coupled to the second elastic member, wherein when the connector is fastened, the stopper pin is configured to move in the third direction along the fastening groove and fix the connector by applying an elastic force to the second elastic member.

When the connector is fastened, the stopper pin may come into contact with the side protrusion and moves in the third direction, and may be located between the side protrusion and the stopper protrusion by the second elastic member.

When the driving unit stops traveling, the guide block of the fastening shaft may be configured to move in the first direction along the guide groove and apply an elastic force to the first elastic member, and movement of the cart in the first direction may be stopped by the elastic force applied to the first elastic member.

The brake unit may include: a wheel frame having one end coupled to the opposite end of the traction bar; a rotation shaft disposed in the second direction and rotatably coupled to an opposite end of the wheel frame; and a traction wheel coupled to the rotation shaft and rotatable together with the rotation shaft.

The brake frame may be coupled to the fastening shaft so as to be pivotable about the fastening shaft, the brake frame may be configured to pivot by movement of the cart in the first direction when the driving unit stops traveling, the brake unit may include a braking assembly configured to stop rotation of the traction wheel by the pivoting of the brake frame, and the movement of the cart in the first direction may be stopped by driving of the braking assembly.

The braking assembly may include: a brake drum connected to the rotation shaft and rotatable together with the traction wheel; a brake wheel disposed adjacent to the brake drum and coupled to an opposite end of the brake frame; and a brake pad coupled to the brake wheel and configured to cause friction with the brake drum.

The brake wheel may include a brake bar extending from an outer circumferential surface thereof and hinged to the opposite end of the brake frame, and the brake wheel may be configured to rotate together when the brake frame pivots and bring the brake pad into close contact with the brake drum.

### [Advantageous Effects]

The mobile robot and the mobile system according to the present disclosure may stop the movement of the cart together when the mobile robot, which moves in combination with the cart, stops.

In addition, even when the moving speed of the mobile robot changes or the mobile robot suddenly stops, the moving cart may be stably stopped.

In addition, because the moving cart may be stably stopped, higher moving speed of the mobile robot may be allowed and the work efficiency may be increased.

Effects obtainable from the present embodiments are not limited by the above mentioned effects, and other unmentioned effects can be clearly understood from the above description by those having ordinary skill in the technical field to which the present disclosure pertains.

### [Brief Description of the Drawings]

FIG. 1 is a diagram illustrating a cloud system based on a 5G network according to an embodiment of the present disclosure.
FIG. 2 is a block diagram illustrating appearance of a mobile robotaccording to an embodiment of the present disclosure.
FIG. 3 is a diagram illustrating a robot control system according to an embodiment of the present disclosure.
FIG. 4 is a perspective view of a mobile robot according to an embodiment of the present disclosure.
FIG. 5 is a diagram illustrating a shape in which a connector of a cart is connected to a brake unit of a mobile robot in a mobile system according to an embodiment of the present disclosure.
FIG. 6 is a diagram illustrating a brake unit of a mobile robot according to an embodiment of the present disclosure.
FIG. 7 is a diagram illustrating a fastening shaft in a brake unit of a mobile robot according to an embodiment of the present disclosure.
FIG. 8 is a diagram illustrating a cross-section taken along a line A-A in FIG. 6.
FIG. 9 is a diagram for describing a guide block of a fastening shaft moving along a guide groove in a mobile robot according to an embodiment of the present disclosure.
FIG. 10 is a rear view of a brake unit of a mobile robot according to an embodiment of the present disclosure.
FIG. 11 is a side view of a brake unit of a mobile robot according to an embodiment of the present disclosure.
FIG. 12 is a diagram for describing stopping of rotation of a traction wheel via a brake unit of a mobile robot according to an embodiment of the present disclosure.
FIG. 13 is a side view of a braking assembly of a brake unit in a mobile robot according to an embodiment of the present disclosure.
FIG. 14 is a diagram for describing driving of a braking assembly of a brake unit in a mobile robot according to an embodiment of the present disclosure.
FIG. 15 is a diagram for describing fastening of a mobile robot and a cart according to an embodiment of the present disclosure.
FIG. 16 is a cross-sectional view taken along a line B-B in FIG. 5, which is a cross-sectional view of a connector holder to which a connector is fastened, cut along an xz plane.
FIG. 17 is a diagram for describing rotation of a connector holder and a traction bar of a brake unit in a mobile robot according to an embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

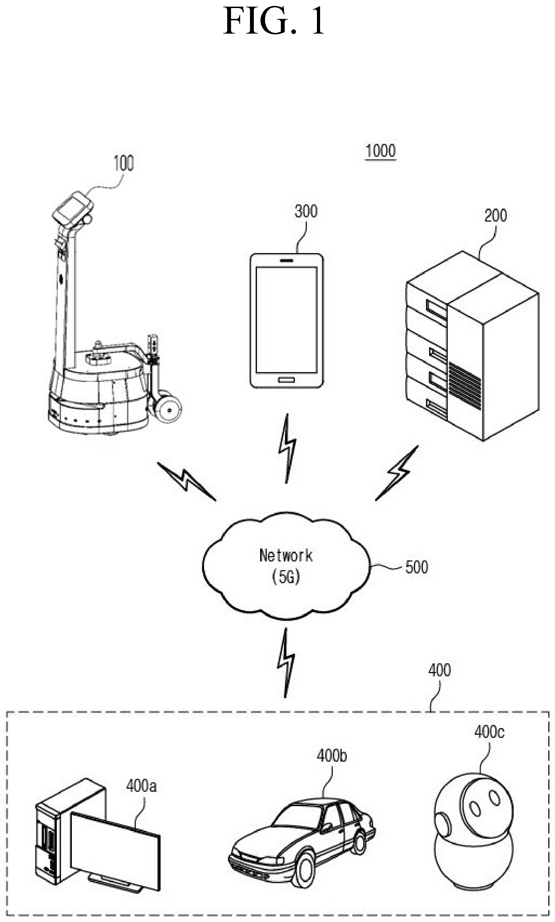

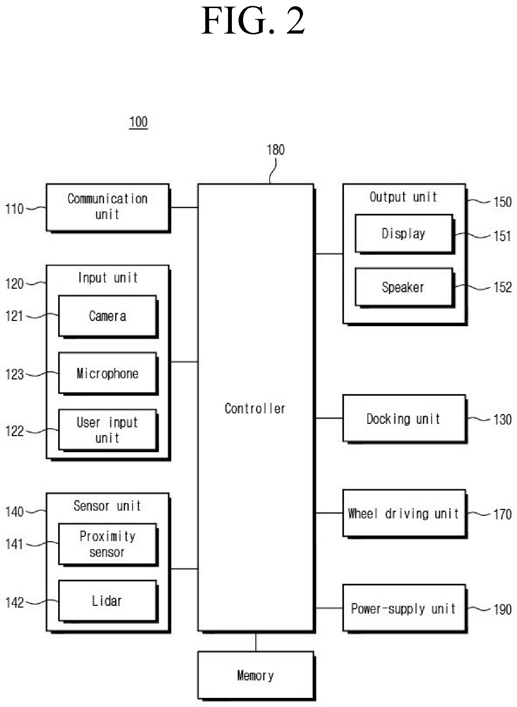

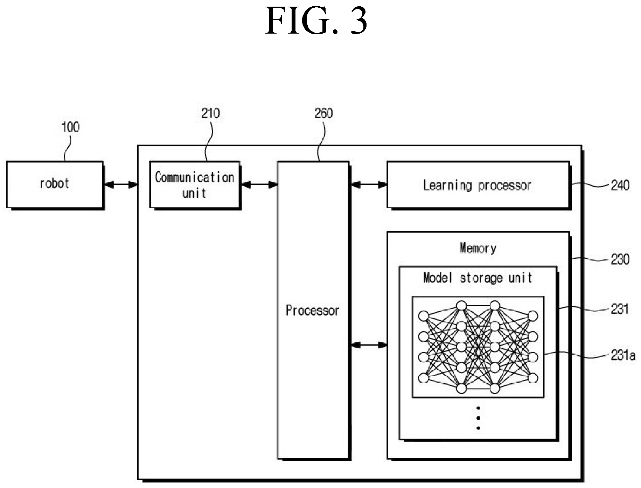

FIG. 1 is a diagram illustrating a cloud system (1000) based on a 5G network according to an embodiment of the present disclosure. FIG. 2 is a block diagram illustrating appearance of a mobile robot(100) according to an embodiment of the present disclosure. FIG. 3 is a diagram illustrating a robot control system (200) according to an embodiment of the present disclosure.

FIG. 1 is a diagram illustrating a cloud system 1000 based on a 5G network according to an embodiment of the present disclosure.

Referring to FIG. 1, the cloud system 1000 may include a mobile robot100, a mobile terminal 300, a robot control system 200, various devices 400, and a 5G network 500.

The mobile robot100 is a robot that transports goods (articles) from a departure point to a destination. The mobile robot100 can move directly from a logistics center to a destination. Alternatively, after the mobile robotis loaded on a vehicle at the logistics center and is then delivered to the vicinity of the destination by the vehicle, the mobile robotis unloaded from the vehicle and then moves to the destination.

In addition, the mobile robot100 may move articles to the destination not only outdoors but also indoors. The mobile robot100 can be implemented as an AGV, and the AGV may be a transport device that moves by a sensor, a magnetic field, a vision device, etc. on the floor.

The mobile robot100 may include a storage area for storing articles therein, the storage area may be divided into a plurality of partial storage areas to load various articles, and various types of articles may be placed in the partial storage areas. Accordingly, mixing of articles can be prevented.

The mobile terminal 300 may communicate with the mobile robot100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the mobile robot100 and respond to various requests of the mobile robot100. For example, the robot control system 200 may perform calculations using artificial intelligence (AI) based on the request from the mobile robot100.

In addition, the robot control system 200 may determine a movement path of the mobile robot100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the mobile robot100 arrives at the transport destination of the articles, the mobile robot100 can directly deliver the articles to the home robot 400c through communication with the home robot 400c.

The various devices 400 may be connected to the mobile robot100, the mobile terminal 300, the robot control system 200, etc., via the 5G network 500 by wire or wirelessly.

The mobile robot100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

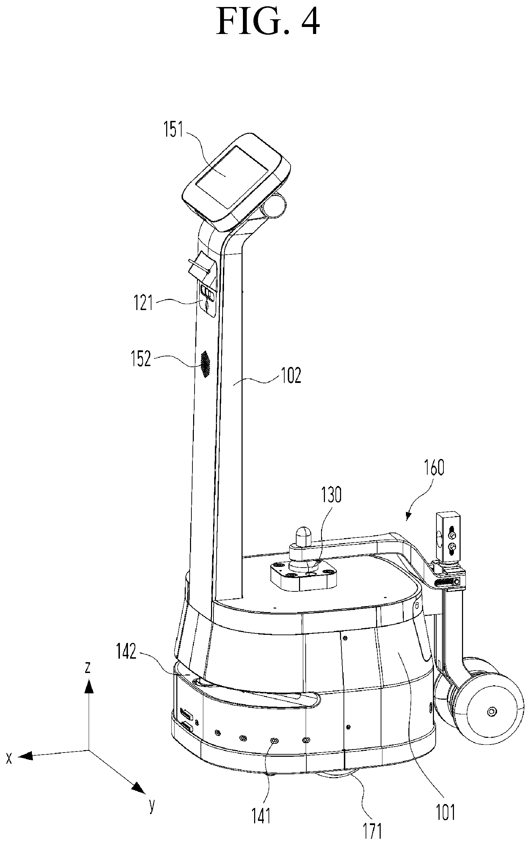

FIG. 2 is a drawing illustrating appearance of the mobile robot100 according to an embodiment of the present disclosure. The mobile robot100 according to an embodiment of the present disclosure will be explained with reference to FIG. 4.

The mobile robot100 may include a body (101, see Fig. 4) including a storage area 50, and constituent components to be described later may be included in the body. The mobile robot100 may include a communication unit 110, an input unit 120, a sensor unit 140, an output unit 150, a memory 185, a wheel driving unit 170, a controller 180, and a power-supply unit 190.

The constituent components shown in FIG. 2 are not always required to implement the mobile robot100, such that it should be noted that the mobile robot100 according to the present disclosure may include more or fewer components than the elements listed above.

The communication unit 110 may include a wired or wireless communication module capable of communicating with the robot control system 200.

As an optional embodiment, the communication unit 110 Global System for Mobile communication (may be equipped with modules for GSM), Code Division Multi Access (CDMA), Long Term Evolution (LTE), 5G, Wireless LAN (WLAN), Wireless-Fidelity (Wi-Fi), Radio Frequency Identification (RFID), infrared communication (IrDA), ZigBee, Near Field Communication (and NFC) communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. Here, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, cameras with different functions may be provided. For example, a wide-angle camera, an infrared (IR) camera, etc. may be provided. The camera may serve as a sensor unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the mobile robot100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include an article information input unit, and the article information input unit may receive information about the article's size, information about the article's weight, destination information, information about a transport requester, etc. At this time, the article information input unit may include a code reader.

The sensor unit 140 may obtain at least one of internal information of the mobile robot100, surrounding environment information of the mobile robot100, and user information using various sensors.

At this time, the sensor unit 140 may include various types of sensors for recognizing the surroundings for autonomous driving. Representative examples may include a distance detection sensor or a proximity sensor 141 and a Lidar 141.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be provided on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar 142 is similar to that of a radar, but different electromagnetic waves are used in the Lidar 142 and the radar, so that the Lidar 142 and the radar are designed to use different technologies and different utilization ranges.

Lasers may damage human eyesight because they use light with a wavelength of 600 to 1000 nm. The Lidar 142 uses a longer wavelength than the lasers, and is used to measure not only the distance to a target object, but also a moving speed and direction, temperature, surrounding atmospheric material analysis, a concentration measurement, and the like.

In addition, the sensor unit 140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

The memory 185 may store data that supports various functions of the mobile robot100. The memory 185 may store not only a plurality of application programs (or applications) driven by the mobile robot100, but also data and commands required to operate the mobile robot100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the mobile robot100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The driving unit 170 is a means for moving the mobile robot100, may include wheels or legs, and may include a wheel driving unit and a leg driving unit for controlling the wheels or legs.

A plurality of wheels provided on the bottom surface of the wheel driving unit may be controlled to move the mobile robot100 including the body. The wheels may include a main wheel 171 for fast driving, a caster 173 for changing the direction to another direction, and an auxiliary caster for stable driving so that the loaded articles (L) do not fall during driving.

The leg driving unit (not show) may control multiple legs according to control of the controller 180, and may thus move the body. The plurality of legs may correspond to a configuration formed so that the mobile robot100 can walk or run. The plurality of legs may be implemented as four legs, but the scope of the present disclosure is not limited thereto. The plurality of legs may be coupled to the body to be integrally formed, and may be implemented to be detachably coupled to the body.

The mobile robot100 may move the body through the driving unit 170 having at least one of the wheel driving unit and/or the leg driving unit. However, in this specification, an example in which the wheel driving unit is mounted on the mobile robot100 will be mainly described.

The controller 180 is a module that controls the configurations of the mobile robot100. The controller 180 may refer to a data processing device embedded in hardware that has a physically structured circuit to perform a function expressed by code or commands included in a program. As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

For example, the controller 180 may collect the above information through the input unit 120. The input of the input unit 120 may also include a touch input on the display.

Based on the collected information, the controller 180 may transmit information on the articles (L) loaded in the loading area 50 to the mobile terminal 200 (see FIG. 1) through the communication unit 110.

Referring to FIG. 3, the robot control system 200 may include an artificial intelligence (AI) server.

The AI server may mean a device that uses a machine learning algorithm to train an artificial neural network or uses a trained artificial neural network. Here, the robot control system 200 may include a plurality of servers to perform distributed processing, and may be defined as a 5G network. At this time, the AI server may be included as a part of the configuration of the mobile robot100, and may also enable the mobile robot100 to perform at least a part of the Alprocessing.

The robot control system 200 may include a communication unit 210, a memory 230, a learning processor 240, a processor 260, etc.

The communication unit 210 may transmit and receive data to and from an external device such as the mobile robot100.

The memory 230 may include a model storage unit 231. The model storage unit 231 may store a learning or learned model (or an artificial neural network 231a) through the learning processor 240.

The learning processor 240 may train (or lean) the artificial neural network 231a using training data (also called learning data). The learning model may be used while being loaded into the robot control system 200 of the artificial neural network, or may be loaded into an external device such as the mobile robot100 and then used.

The learning model may be implemented as hardware, software, or a combination of hardware and software. If all or some of the learning model are implemented as software, one or more commands constituting the learning model can be stored in the memory 230.

The processor 260 may infer a result value for new input data using the learning model, and may generate a response or control command based on the inferred result value.

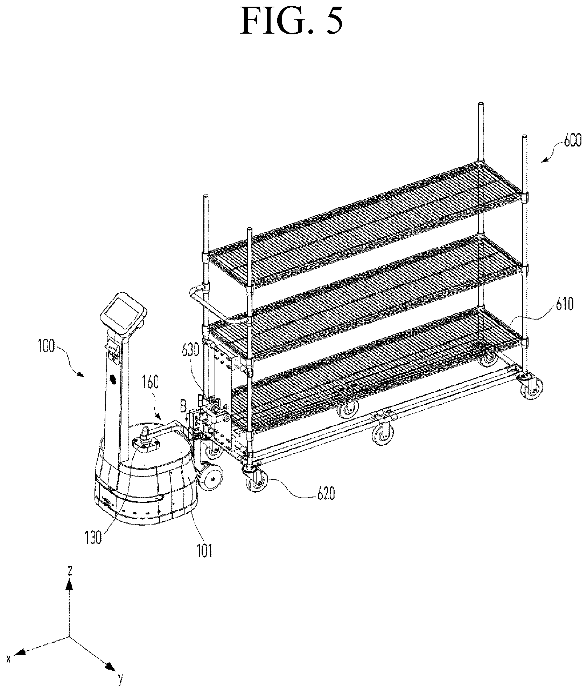

FIG. 4 is a perspective view of the mobile robot 100 according to an embodiment of the present disclosure. FIG. 5 is a diagram illustrating a shape in which a connector 630 of a cart 600 is connected to a brake unit 160 of the mobile robot 100 in a mobile system according to an embodiment of the present disclosure. in this regard, the mobile system according to an embodiment of the present disclosure refers to both the mobile robot 100 and the cart 600.

As described above with reference to FIG. 2, the mobile robot 100 according to an embodiment of the present disclosure may move via the driving unit 170 located under the body 101. In addition, the body 101 of the mobile robot 100 may have a box shape, and may have a flat shape because it is sufficient to mount components such as the driving unit 170, the battery, a substrate assembly, and the like therein.

However, for user's convenience of use, the display 151 may be disposed above the body 101 via a vertical bracket 102 in consideration of the user's eye level. In addition, the display 151 may include a touch sensor to function not only as the output unit 150 as described above with reference to FIG. 2, but also as the input unit 120. In this case, a user may perform inputting of a destination, changing of function settings of the mobile robot 100, and the like via the display 151.

Referring to FIG. 5 together, the vertical bracket 102 on which the display 151 is located may be located at a front side (along the x-axis) of the mobile robot 100 so as not to interfere with the cart 600 when the mobile robot 100 and the cart 600 are coupled to each other.

The camera 121, the speaker 152, or the like may be located at the vertical bracket 102 in addition to the display 151.

Referring to FIG. 5 together, when considering the height of the cart 600, it is necessary to sense the presence or absence of an obstacle up to an upper portion of the mobile robot 100. When the camera 121 is located at a high vertical level (along the z-axis), a sensable range is expanded, so that the vertical bracket 102 may be used to place the camera 121 at a predetermined vertical level.

Accordingly, the mobile robot 100 according to an embodiment of the present disclosure may include the camera 121 located at a predetermined vertical level, and may further include a pair of cameras consisting of a front-facing camera and a camera located obliquely downward.

In addition, the speaker 152 may be further provided to provide a warning sound or a notification to a user, and may be located on the vertical bracket 102 in consideration of the position of the user's ears.

The LiDAR 142 and the proximity sensor 141 may be located in the body 101. Because the LiDAR 142 has a wide sensing range, the body 101 may include a long groove defined therein as shown in FIG. 4 in order to expand the sensing range of the LiDAR 142.

The proximity sensor 141 may include a plurality of proximity sensors located along the circumference of the body 101 in order to precisely sense the position. Because an obstacle located in front (along the x-axis) of the mobile robot 100 mainly becomes a problem, and the cart 600 may be located at the rear of the mobile robot 100, the proximity sensor 141 may be located only at a front side of the body 101.

Referring to FIG. 2 together, the main wheel 171 constituting the driving unit 170 may be connected to a motor to directly transfer driving force to the body 101, and may control the moving speed of the mobile robot 100 by adjusting the speed of the motor. In addition, the caster (not shown) may include an axle that is a rotation shaft of the wheel and a main shaft that is disposed in a direction perpendicular to the axle and swivels relative to the body 101. The moving direction of the mobile robot may be controlled using the caster or may be changed by adjusting the speed of turning to the left and right of the main wheel 171. The body 101 may also rotate in place by adjusting the direction of the caster, and the driving unit 170 of this type may serve to help the mobile robot 100 move while avoiding obstacles in a limited space.

The mobile robot 100 may be of a type capable of mounting goods by itself, but the mobile robot 100 according to the present disclosure is a type of mobile robot 100 that moves the cart 600 by being connected to the cart 600 loaded with goods.

The mobile robot 100 according to an embodiment of the present disclosure may include a fixing bracket 130 located on an upper surface of the body 101 and the brake unit 160 connected to the fixing bracket 130. Further, the connector 630 of the cart 600 may be connected to the brake unit 160.

In particular, the mobile robot 100 according to an embodiment of the present disclosure may stop, via the brake unit 160, the movement of the cart 600 when the driving unit 170 stops traveling. More details thereof will be described later.

Referring to FIG. 5, in the mobile system according to an embodiment of the present disclosure, the cart 600 may include a loading space on an upper surface of a transport plate 610 and may have a layered structure to stably load a large amount of goods. In addition, unlike what is shown in FIG. 5, the cart 600 may have a shape without a side frame so as to facilitate loading and unloading of goods.

In addition, the cart 600 may include a plurality of moving wheels 620 at a lower portion thereof. The moving wheels 620 may be located on at least four corners for stable transportation. In addition, the moving wheels 620 may be additionally located in the middle in the longitudinal direction (in the x-axis direction) in addition to the four corners. In this case, even when the length of the cart 600 increases to one side, the cart 600 may be stably moved.

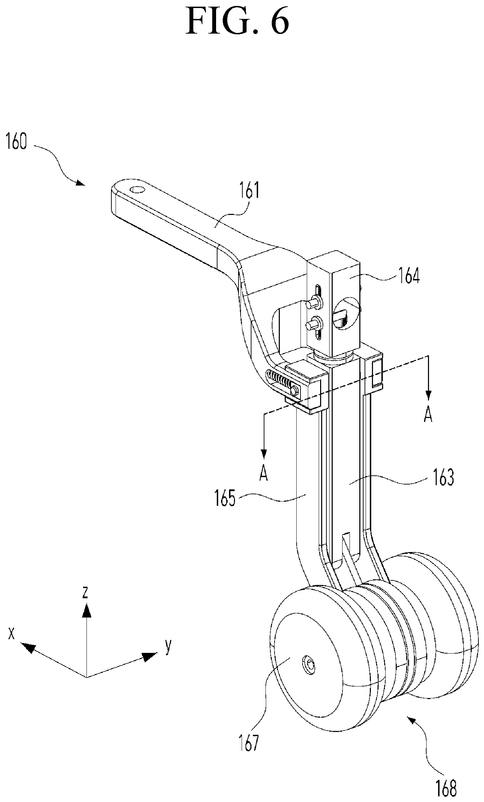

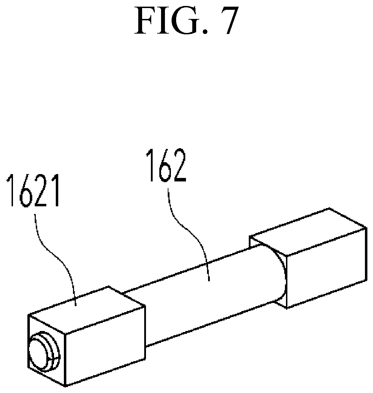

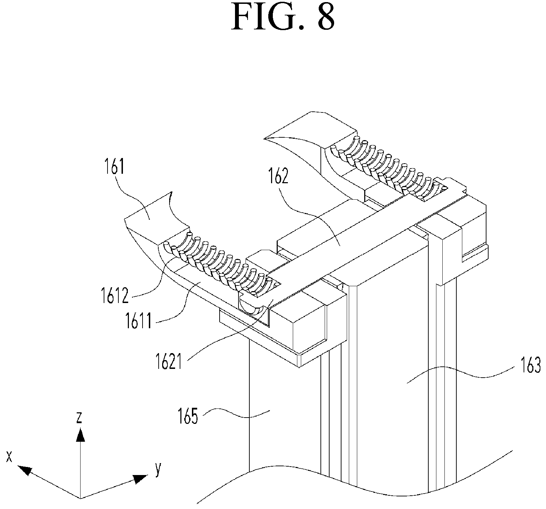

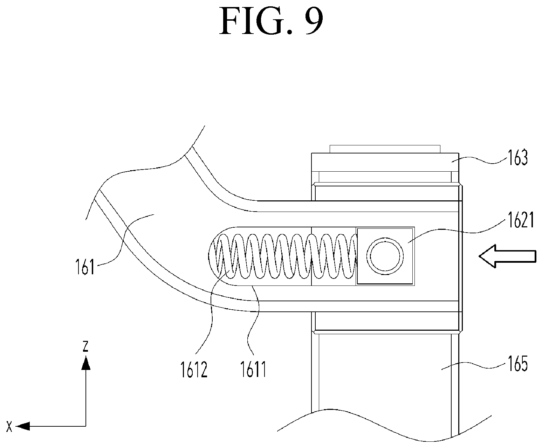

FIG. 6 is a diagram illustrating the brake unit 160 of the mobile robot 100 according to an embodiment of the present disclosure. FIG. 7 is a diagram illustrating a fastening shaft 162 in the brake unit 160 of the mobile robot 100 according to an embodiment of the present disclosure. FIG. 8 is a diagram illustrating a cross-section taken along a line A-A in FIG. 6. Further, FIG. 9 is a diagram for describing a guide block 1621 of the fastening shaft 162 moving along a guide groove 1611 in the mobile robot 100 according to an embodiment of the present disclosure.

As described above, because the weight of the cart 600 for transporting the goods is greater than the weight of the robot 100, the cart 600 has the greater momentum. Therefore, even when the mobile robot 100 stops, the cart 600 does not stop immediately and pushes the mobile robot 100 forward.

Conventionally, due to the above-described problem, the moving speed of the mobile robot 100 is inevitably low, and accordingly, the work efficiency of logistics transport is inevitably lowered. In addition, to solve the above-described problem, applying brake devices to the moving wheels 620 themselves mounted on the cart 600 is challenging due to the size of the wheels 620 mounted on the cart 600 or spatial constraints.

Accordingly, the mobile robot 100 according to an embodiment of the present disclosure may include the brake unit 160, and may stop the movement of the cart 600 via the brake unit 160. In this regard, the brake unit 160 may include a traction bar 161, the fastening shaft 162, a brake frame 163, and a connector holder 164.

Referring to FIGS. 4 and 5 together, one end of the traction bar 161 may be coupled to the fixing bracket 130. In addition, the traction bar 161 may include, at an opposite end thereof, a guide groove 1611 defined to extend in a first direction (the x-axis direction), which is the traveling direction of the mobile robot 100, and in which a first elastic member 1612 is located.

The fastening shaft 162 may be disposed in a second direction (the y-axis direction) perpendicular to the first direction (the x-axis direction). In addition, referring to FIGS. 6 and 7 together, the fastening shaft 162 may be formed with the guide block 1621 that is inserted into the guide groove 1611 to come into contact with the first elastic member 1612.

The brake frame 163 may be coupled to the fastening shaft 162, and the connector holder 164 may be coupled to one end of the brake frame 163 and, as shown in FIG. 5, may be fastened with the connector 630 of the cart 600 as the connector 630 extends therethrough.

Referring to FIG. 5, when the mobile robot 100 moves in the first direction (the x-axis direction), which is the traveling direction, the cart 600 connected to the mobile robot 100 also moves in the first direction (the x-axis direction). As described above, because the moving wheels 620 of the cart 600 do not have the brake devices for braking, even when the mobile robot 100 stops, the cart 600 continues to move in the first direction (the x-axis direction) by the kinetic force and the inertial force in the first direction.

In this regard, as shown in FIG. 9, the guide block 1621 of the fastening shaft 162 may move in the first direction (the x-axis direction) along the guide groove 1611 and apply an elastic force to the first elastic member 1612.

That is, the mobile robot 100 according to an embodiment of the present disclosure may stop the movement of the cart 600 in the first direction using the elastic force applied to the first elastic member 1612, and accordingly, the cart 600 may also stop when the mobile robot 100 stops.

In addition, according to the present disclosure, when adjusting the speed of the mobile robot 100, for example, even when the moving speed of the mobile robot 100 is reduced while the mobile robot 100 is moving, the moving speed of the cart 600 may be reduced using the elastic force applied to the first elastic member 1612 as described above, so that the cart 600 may not push the mobile robot 100 forward.

In addition, in the brake unit 160 of the mobile robot 100 according to an embodiment of the present disclosure, the guide block 1621 of the fastening shaft 162 may be formed in a rectangular shape as shown in FIG. 7. This is to ensure that the guide block 1621 moves in the first direction (the x-axis direction) along the guide groove 1611 defined in the first direction (the x-axis direction) as described above with reference to FIG. 9.

In addition, because the guide block 1621 is formed in a rectangular shape, the fastening shaft 162 may not rotate when the guide block 1621 moves along the guide groove 1611. Accordingly, the elastic force applied to the first elastic member 1612 may be efficiently transmitted to the cart 600.

Referring back to FIG. 6, the brake unit 160 of the mobile robot 100 according to an embodiment of the present disclosure may additionally include a wheel frame 163 coupled to the traction bar 161, a rotating traction wheel 167, and a braking assembly 168 that stops the rotation of the traction wheel 167. Details thereof will be described later.

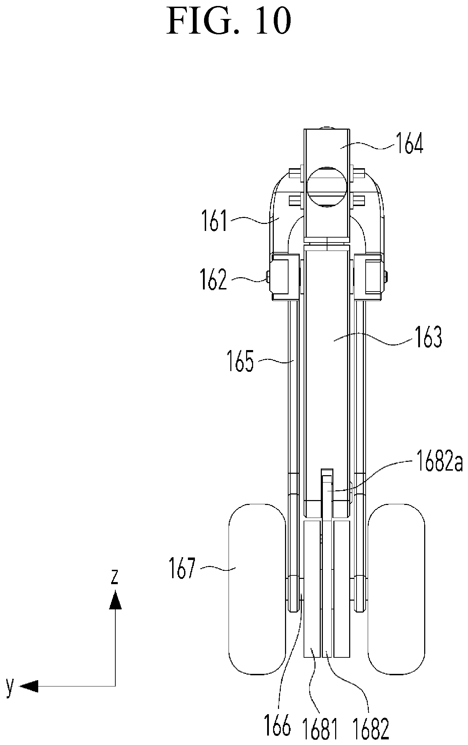

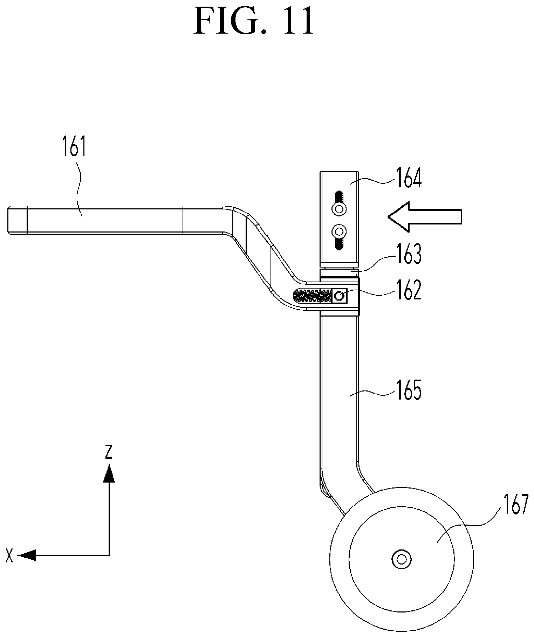

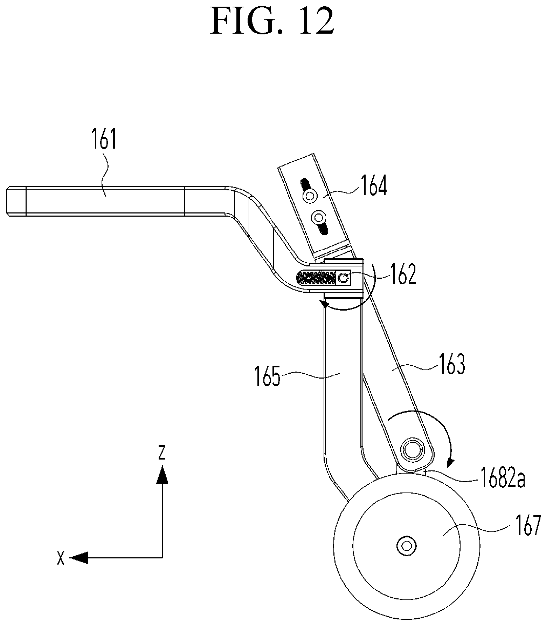

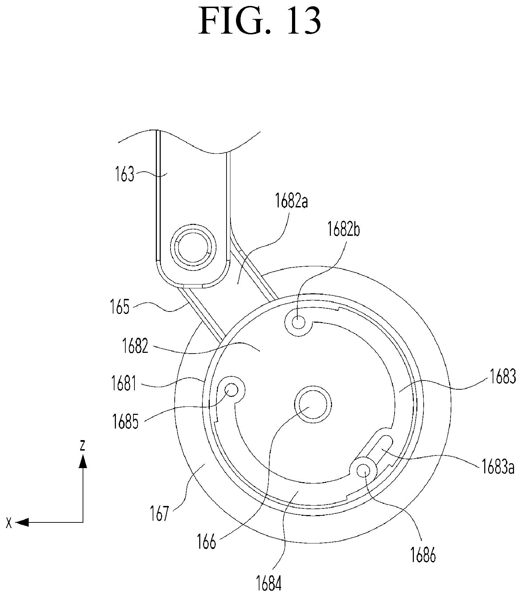

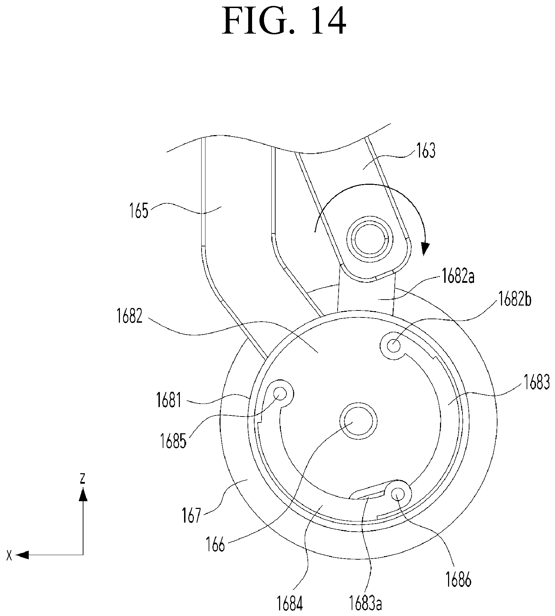

FIG. 10 is a rear view of the brake unit 160 of the mobile robot 100 according to an embodiment of the present disclosure. FIG. 11 is a side view of the brake unit 160 of the mobile robot 100 according to an embodiment of the present disclosure. FIG. 12 is a diagram for describing stopping of the rotation of the traction wheel 167 via the brake unit 160 of the mobile robot 100 according to an embodiment of the present disclosure. FIG. 13 is a side view of the braking assembly 168 of the brake unit 160 in the mobile robot 100 according to an embodiment of the present disclosure. Further, FIG. 14 is a diagram for describing driving of the braking assembly 168 of the brake unit 160 in the mobile robot 100 according to an embodiment of the present disclosure.

As described above with reference to FIG. 9, the movement of the cart 600 may be stopped using the elastic force of the first elastic member 1612, but when the mobile robot 100 suddenly stops, relying solely on the elastic force of the first elastic member 1612 may have limitations in stopping the movement of the cart 600.

Accordingly, as shown in FIGS. 6, 10, and 11, the brake unit 160 of the mobile robot 100 according to an embodiment of the present disclosure may include the wheel frame 163 having one end coupled to an opposite end of the traction bar 161, a rotation shaft 166 disposed in the second direction (the y-axis direction) and rotatably coupled to an opposite end of the wheel frame 163, and the traction wheel 167 coupled to the rotation shaft 166 and rotatable together with the rotation shaft 166. In addition, as shown in FIG. 12, the brake frame 163 may be coupled to be pivotable about the fastening shaft 162. Accordingly, the brake frame 163 may pivot by the movement of the cart 600 in the first direction (the x-axis direction) when the mobile robot 100 stops.

In addition, the brake unit 160 may include the braking assembly 168 that stops the rotation of the traction wheel 167 by the pivoting of the brake frame 163. Further, the movement of the cart 600 in the first direction (the x-axis direction) may be stopped via the braking assembly 168.

That is, as described above with reference to FIG. 5, because there are limitations in applying the brake devices to the moving wheels 620 themselves of the cart 600, the mobile robot 100 according to an embodiment of the present disclosure may include the traction wheel 167 that rotates together with the rotation shaft 166, and the braking assembly 168 that stops the rotation of the traction wheel 167 to stop the movement of the cart 600. Accordingly, even when the mobile robot 100 suddenly stops, the moving cart 600 may be stably stopped.

More specifically, referring to FIGS. 13 and 14 together, the braking assembly 168 of the mobile robot 100 according to an embodiment of the present disclosure may include a brake drum 1681 that is connected to the rotation shaft 166 and rotates together with the traction wheel 167, a brake wheel 1682 disposed adjacent to the brake drum 1681 and coupled to an opposite end of the brake frame 163, and a brake pad 1683 that is coupled to the brake wheel 1682 and causes friction with the brake drum 1681.

In this regard, the brake drum 1681 may include a side portion extending from an outer circumferential surface thereof toward the second direction (the y-axis direction), and the brake pad 1683 may cause friction by coming into contact with an inner surface of the side portion of the brake drum 1681.

The brake wheel 1682 may include a brake bar 1682a extending from an outer circumferential surface thereof and hinged to the opposite end of the brake frame 163. Accordingly, the brake wheel 1682 may rotate together when the brake frame 163 pivots, and the brake pad 1683 coupled to the brake wheel 1682 may come into close contact with the brake drum 1681 by the rotation of the brake wheel 1682.

That is, the braking assembly 168 of the mobile robot 100 according to an embodiment of the present disclosure may stop the rotation of the traction wheel 167 by bringing the brake pad 1683 into close contact with the rotating brake drum 1681. Accordingly, even when the mobile robot 100 suddenly stops, the moving cart 600 may be stably stopped.

FIGS. 13 and 14 are diagrams illustrating an embodiment of a structure in which the brake pad 1683 comes into close contact with the brake drum 1681. A coupling protrusion 1682b may be formed on a side surface of the brake wheel 1682, and one end of the brake pad 1683 may be coupled to the coupling protrusion 1682b.

In addition, a guide pad 1684 may be included to allow the brake pad 1683 to be in close contact with the brake drum 1681 when the brake wheel 1682 rotates. One end of the guide pad 1684 may be coupled to a fixed protrusion 1685 connected to and fixed to the wheel frame 163 or the brake drum 1681.

Here, a connection pin 1686 may be located at an opposite end of the guide pad 1684, and the connection pin 1686 may be inserted into a connection groove 1683a defined at an opposite end of the brake pad 1683 to connect the brake pad 1683 and the guide pad 1684 to each other.

Therefore, when the brake wheel 1682 rotates, the brake pad 1683 may also rotate, and the brake pad 1683 and the guide pad 1684 may come into close contact with the brake drum 1681 while spreading toward an inner surface of the brake drum 1681 by the connection pin 1686 inserted into the connection groove 1683a. Accordingly, the rotation of the traction wheel 167 may be stopped.

That is, according to the present disclosure, even when the mobile robot 100 suddenly stops, the cart 600 may be stably stopped through the driving of the braking assembly 168 of the brake unit 160 described above. Furthermore, according to the present disclosure, even when the moving speed of the mobile robot 100 is increased, the moving cart 600 may be stably stopped, thereby increasing the work efficiency.

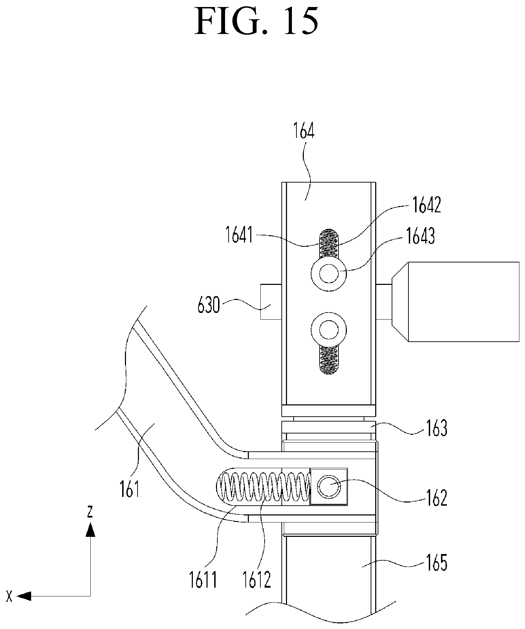

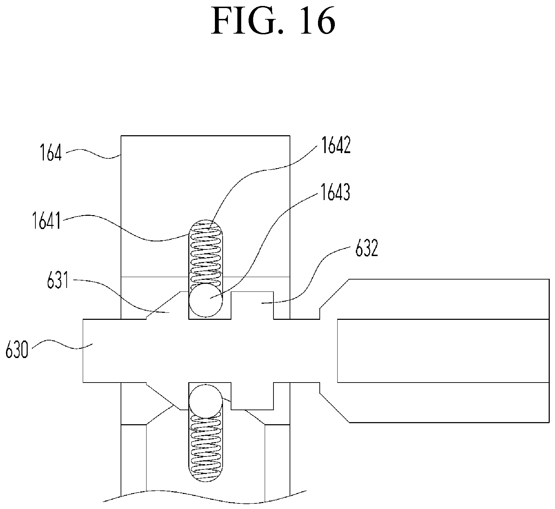

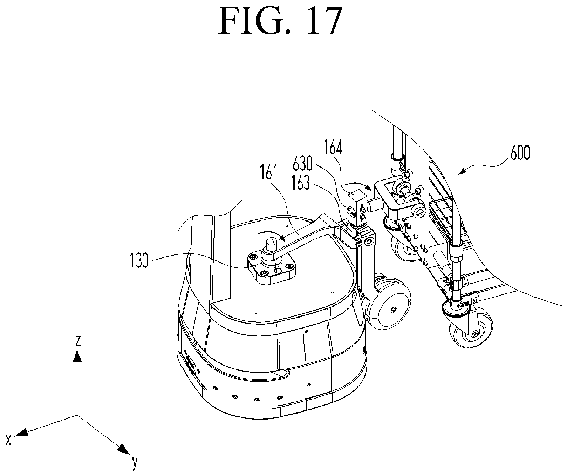

FIG. 15 is a diagram for describing fastening of the mobile robot 100 and the cart 600 according to an embodiment of the present disclosure. FIG. 16 is a cross-sectional view taken along a line B-B in FIG. 5, which is a cross-sectional view of the connector holder 164 to which the connector 630 is fastened, cut along an xz plane. Further, FIG. 17 is a diagram for describing rotation of the connector holder 164 and the traction bar 161 of the brake unit 160 in the mobile robot 100 according to an embodiment of the present disclosure.

Referring to FIG. 5 together, in the mobile system according to an embodiment of the present disclosure, the brake unit 160 of the mobile robot 100 may be connected to the fixing bracket 130, and the connector 630 of the cart 600 may be connected to the brake unit 160. More specifically, as shown in FIGS. 15 and 16, the connector 630 of the cart 600 may extend through and be fastened to the connector holder 164, which is coupled to one end of the brake frame 163.

The connector 630 may include, on a side surface thereof, a side protrusion 631 protruding while being inclined in a direction opposite to the first direction (the x-axis direction), and a stopper protrusion protruding while being spaced apart from the side protrusion 631.

In addition, the connector holder 164 may include a fastening groove which is defined in a third direction (the z-axis direction) perpendicular to the first direction (the x-axis direction) and the second direction (the y-axis direction) and in which a second elastic member 1642 is located. In addition, the connector holder 164 may include a stopper pin 1643 that is coupled to the second elastic member 1642, and when the connector 630 is fastened, moves in the third direction (the z-axis direction) along the fastening groove 1641, and fixes the connector 630 by applying an elastic force to the second elastic member 1642.

Accordingly, when the connector 630 is fastened, the stopper pin 1643 may come into contact with the side protrusion 631 and move in the third direction (the z-axis direction), and may be located between the side protrusion 631 and the stopper protrusion 632 by the second elastic member 1642.

That is, the stopper pin 1643 may fix the connector 630 by pressing the same in the third direction (the z-axis direction) through the second elastic member 1642, and may be located between the side protrusion 631 and the stopper protrusion 632 to prevent the connector 630 from moving in the first direction (the x-axis direction).

In addition, as shown in FIG. 17, in the mobile robot 100 according to an embodiment of the present disclosure, the connector holder 164 of the brake unit 160 may pivot about the third direction (the z-axis direction). This is to allow the cart 600 to stably move in consideration of the traveling direction of the mobile robot 100.

Furthermore, even when the mobile robot 100 stops in a state in which the connector holder 164 has pivoted about the third direction (the z-axis direction), because the brake unit 160 excluding the connector holder 164 does not pivot, the movement of the cart 600 may be stopped by being driven in the same manner as described above.

Additionally, in the mobile robot 100 according to an embodiment of the present disclosure, the traction bar 161 of the brake unit 160 may pivot about the third direction (the z-axis direction), and accordingly, the cart 600 may be moved more stably in consideration of the traveling direction of the mobile robot 100. Moreover, by quickly aligning the moving directions of the mobile robot 100 and the cart 600 through the pivoting of the traction bar 161, the movement of the cart 600 may be stably stopped during the driving of the brake unit 160 described above.

Summarizing the above, the mobile robot and the mobile system according to the present disclosure may stop the movement of the cart together when the mobile robot, which moves in combination with the cart, stops. In addition, even when the moving speed of the mobile robot changes or the mobile robot suddenly stops, the moving cart may be stably stopped. In addition, because the moving cart may be stably stopped, higher moving speed of the mobile robot may be allowed and the work efficiency may be increased.

The above detailed description is not to be construed as limiting in any respect and should be considered exemplary. The scope of the disclosure is to be determined by a reasonable interpretation of the appended claims, and all changes within the equivalents of the disclosure are included in the scope of the disclosure.

## Claims

1. A mobile robot comprising:
a body including a driving unit;
a fixing bracket located on an upper surface of the body; and
a brake unit connected to the fixing bracket, wherein a connector of a cart is connectable to the brake unit, wherein the brake unit is configured to stop movement of the cart when the driving unit stops traveling,
wherein the brake unit includes:
a traction bar having one end coupled to the fixing bracket;
a guide groove defined at an opposite end of the traction bar to extend in a first direction that is a traveling direction of the driving unit, wherein a first elastic member is located in the guide groove;
a fastening shaft disposed in a second direction perpendicular to the first direction and having a guide block inserted into the guide groove to be in contact with the first elastic member;
a brake frame coupled to the fastening shaft; and
a connector holder coupled to one end of the brake frame, wherein the connector of the cart extends through and is fastened to the connector holder.

2. The mobile robot of claim 1, wherein the guide block of the fastening shaft is configured to move in the first direction along the guide groove and apply an elastic force to the first elastic member when the driving unit stops traveling.

3. The mobile robot of claim 2, wherein the guide block of the fastening shaft is formed in a rectangular shape so that the fastening shaft does not rotate when moving along the guide groove.

4. The mobile robot of claim 1, wherein the brake unit includes:
a wheel frame having one end coupled to the opposite end of the traction bar;
a rotation shaft disposed in the second direction and rotatably coupled to an opposite end of the wheel frame; and
a traction wheel coupled to the rotation shaft and rotatable together with the rotation shaft.

5. The mobile robot of claim 4, wherein the brake frame is coupled to the fastening shaft so as to be pivotable about the fastening shaft,
wherein the brake frame is configured to pivot in response to movement of the cart in the first direction when the driving unit stops traveling,
wherein the brake unit includes a braking assembly configured to stop rotation of the traction wheel by the pivoting of the brake frame.

6. The mobile robot of claim 5, wherein the braking assembly includes:
a brake drum connected to the rotation shaft and rotatable together with the traction wheel;
a brake wheel disposed adjacent to the brake drum and coupled to an opposite end of the brake frame; and
a brake pad coupled to the brake wheel and configured to generate friction with the brake drum.

7. The mobile robot of claim 6, wherein the brake wheel includes a brake bar extending from an outer circumferential surface thereof and hinged to the opposite end of the brake frame,
wherein the brake wheel is configured to rotate together when the brake frame pivots and bring the brake pad into close contact with the brake drum.

8. The mobile robot of claim 1, wherein the connector holder includes:
a fastening groove defined in a third direction perpendicular to the first direction and the second direction, wherein a second elastic member is located in the fastening groove; and
a stopper pin coupled to the second elastic member, wherein when the connector of the cart is fastened, the stopper pin is configured to move in the third direction along the fastening groove and fix the connector of the cart by applying an elastic force to the second elastic member.

9. The mobile robot of claim 1, wherein the connector holder is pivotable about a third direction perpendicular to the first direction and the second direction.

10. The mobile robot of claim 9, wherein the traction bar is pivotable about the third direction.

11. A mobile system comprising:
a mobile robot including a body including a driving unit, a fixing bracket located on an upper surface of the body, and a brake unit connected to the fixing bracket; and
a cart including a connector connected to the brake unit of the mobile robot,
wherein the brake unit includes:
a traction bar having one end coupled to the fixing bracket;
a guide groove defined at an opposite end of the traction bar to extend in a first direction that is a traveling direction of the driving unit, wherein a first elastic member is located in the guide groove;
a fastening shaft disposed in a second direction perpendicular to the first direction and having a guide block inserted into the guide groove to be in contact with the first elastic member;
a brake frame coupled to the fastening shaft; and
a connector holder coupled to one end of the brake frame, wherein the connector of the cart extends through and is fastened to the connector holder,
wherein the brake unit is configured to stop movement of the cart when the driving unit stops traveling.

12. The mobile system of claim 11, wherein the connector of the cart includes, on a side surface thereof:
a side protrusion protruding while being inclined in a direction opposite to the first direction; and
a stopper protrusion protruding while being spaced apart from the side protrusion.

13. The mobile system of claim 12, wherein the connector holder includes:
a fastening groove defined in a third direction perpendicular to the first direction and the second direction, wherein a second elastic member is located in the fastening groove; and
a stopper pin coupled to the second elastic member, wherein when the connector is fastened, the stopper pin is configured to move in the third direction along the fastening groove and fix the connector by applying an elastic force to the second elastic member.

14. The mobile system of claim 13, wherein when the connector is fastened, the stopper pin comes into contact with the side protrusion and moves in the third direction, and is positioned between the side protrusion and the stopper protrusion by the second elastic member.

15. The mobile system of claim 11, wherein when the driving unit stops traveling, the guide block of the fastening shaft is configured to move in the first direction along the guide groove and apply an elastic force to the first elastic member,
wherein movement of the cart in the first direction is stopped by the elastic force applied to the first elastic member.

16. The mobile system of claim 11, wherein the brake unit includes:
a wheel frame having one end coupled to the opposite end of the traction bar;
a rotation shaft disposed in the second direction and rotatably coupled to an opposite end of the wheel frame; and
a traction wheel coupled to the rotation shaft and rotatable together with the rotation shaft.

17. The mobile system of claim 16, wherein the brake frame is coupled to the fastening shaft so as to be pivotable about the fastening shaft,
wherein the brake frame is configured to pivot by movement of the cart in the first direction when the driving unit stops traveling,
wherein the brake unit includes a braking assembly configured to stop rotation of the traction wheel by the pivoting of the brake frame,
wherein the movement of the cart in the first direction is stopped by driving of the braking assembly.

18. The mobile system of claim 17, wherein the braking assembly includes:
a brake drum connected to the rotation shaft and rotatable together with the traction wheel;
a brake wheel disposed adjacent to the brake drum and coupled to an opposite end of the brake frame; and
a brake pad coupled to the brake wheel and configured to cause friction with the brake drum.

19. The mobile system of claim 18, wherein the brake wheel includes a brake bar extending from an outer circumferential surface thereof and hinged to the opposite end of the brake frame,
wherein the brake wheel is configured to rotate together when the brake frame pivots and bring the brake pad into close contact with the brake drum.
